# EUROPEAN PATENT SPECIFICATION

(11) **EP 3 686 131 B1**
(45) Date of publication and mention of the grant of the patent: **17.04.2024**
(21) Application number: 20153289.2
(22) Date of filing: 23.01.2020
(51) Int. Cl.: B65G 1/04

(54) **SHELVING STRUCTURE**
REGALSTRUKTUR
STRUCTURE DE RAYONNAGE

(30) Priority: 25.01.2019 BE 201905043
(43) Date of publication of application: 29.07.2020
(73) Proprietor: STOW INTERNATIONAL N.V., 8587 Spiere-Helkijn (BE)
(72) Inventor: VANDEMERGEL, Luc, 8820 TORHOUT (BE)
(74) Representative: Hostens, Veerle

(56) References cited:
- EP-A1- 2 818 432
- EP-A1- 3 090 966
- EP-A2- 3 053 855
- WO-A1-97/12820
- WO-A1-2014/195867
- WO-A1-2015/140216
- WO-A1-2015/155556
- DE-A1- 2 930 569
- FR-A1- 2 730 715
- JP-U- S5 224 685
- JP-U- S53 160 190
- US-A1- 2014 277 693

## Description

The present invention relates to a shelving structure according to the preamble of claim 1.

The present invention also relates to an assembly of such a shelving structure and a shuttle which is displaceable on this shelving structure.

Many companies already use a shelving structure or 'storage racks' for storing goods by means of pallets. In order to optimize the storage space, shelving structures comprising several storeys are used, with every storey comprising at least one main lane which extends virtually horizontally and along the first direction, and several side lanes which extend virtually horizontally and along the second direction. By means of shuttles which are able to move along the first direction and along the second direction and which can thus travel both on a said main lane and on the side lanes, pallets are placed at the desired location in the shelving structure and also removed therefrom. These shuttles are often referred to by the term `2D shuttles'. The position of the main lane with respect to the side lanes is very important here, since the shuttles have to be able to move quickly between the main lane and said side lanes. This means that the person installing the shelving structure has to ensure that the transition between the main lane and the side lanes is smooth, so that there is little margin for errors with regard to the height of the main lanes and side lanes and/or the distance between the main lanes and side lanes. Even limited margins for errors during the production of the shelving structure may result in a shuttle not being able to move quickly or not being able to move at all on the shelving structure and/or the transition between a specific main lane and a specific side lane not being possible. During production of the shelving structure, the main lanes with crossings and the side lanes are often produced separately. During production of the main lanes with the crossings, it is important that the position of the crossings makes it possible for the position of the crossings to virtually correspond precisely with the position of the side lanes after the shelving structure has been mounted. As a result thereof, one already has to know exactly where the side lanes will be situated during the production of the main lanes with crossings. Therefore, positioning of the side lanes has be carried out very accurately, since this has to correspond to the crossings. All this means that producing and installing a shelving structure is quite complicated, labour-intensive and involves the use of specialists. Thus, in many cases, complicated welded and ground components have to be used in order to make a smooth transition between the main lane and respective side lanes possible.

FR2730715 illustrates an existing shelving structure according to the preamble of claim 1.

This shelving structure comprises several side lanes for storing pallets and at least one main lane. The side lanes intersect the main lane and as such form crossings. The possible tolerances between the side lanes and the main lane are limited.

It is thus an object of the invention to manufacture a shelving structure which is simpler to manufacture, simpler to install and on which shuttles are nevertheless readily movable.

This object is achieved by providing a shelving structure according to claim 1.

Preferably, said tracks are detachably connected to the two rails.

In this case, tracks are used which are connectable to the rails of the main lane and extend substantially between these rails. Preferably, the tracks are elongate and extend along the second direction. In this case, installing the shelving structure is easy, since it is simple to connect the tracks to said rails before, during and/or after mounting the rails of the one or several main lanes. In this case, it is also possible to connect the tracks in a correct and desired way to the rails of the main lane in a simpler way, so that there is already a good transition between the main lane and said side lanes and vice versa. This also means that complicated components, which are welded and ground, can be avoided. As a result thereof, the tracks and/or any other elements of the shelving structure can be made from galvanized sheet steel, thus making a wear-resistant finish obsolete. If the tracks are detachably connectable to the rails, it is possible still to change the position of the tracks with respect to the side lanes, in order thus to compensate for inaccuracies during mounting and/or production.

Since the tracks in this case extend substantially between the rails of the main lane, they also occupy a reduced volume, as a result of which the shelving structure can be designed to be compact and the storage space in which the shelving structure extends can be used in an optimum manner. Due to the position of the tracks, in this case, the surface of the rail on which the shuttle is intended to move, i.e. being the driving surface, may be provided as a virtually uninterrupted assembly, as a result of which the shuttle can be moved on the main lane smoothly and without too much resistance. Since the supporting surface adjoins the first rail, the first rail may also be used to effect the transition between the main lane and the respective side lane (or vice versa), as a result of which a (limited) distance between the first rail and the end portion of said side lane is possible which will not form a hindrance for the transition or only to a lesser extent. The tolerances allowed when mounting the shelving structure are consequently larger. In this case, the crossing may also be of a simple design. Thus, a said crossing may comprise only the two said tracks. The tracks are arranged in such a way that the supporting surface extends substantially between the first rail and the second rail, viewed in the second direction, and thus the supporting surface extends substantially next to the first rail.

The first rail extends opposite and near the end sections of respective side lanes. The second rail then extends at a greater distance from the abovementioned end sections than the first rail. The first rail may extend at a distance from said end sections, but may also virtually abut them. The main lane may extend at the location of the edge of the shelving structure. However, the main lane may also extend more centrally in the shelving structure. The second rail may then also extend opposite and near the end sections of other respective side lanes. Preferably, the supporting surface of each track adjoins both rails of the main lane. This makes it possible for the shuttle to rest on both rails during the transition of the shuttle from the main lane to the respective side lane and vice versa, as a result of which the shuttle can be supported over a larger surface.

In this case, the entire shelving structure is then used in as optimum a manner as possible. In this case, the opening which the shuttle has to bridge at the transition between the side lane and the main lane and vice versa may also be minimized, so that these transitions may run smoothly.

The supporting surface of each track preferably adjoins both rails and the tracks are arranged in such a way that the supporting surface extends substantially between the first rail and the second rail, viewed in the second direction, and thus the supporting surface extends substantially next to the first rail and next to the second rail. In this case, a shuttle can rest on both rails during the transition from the main lane to the respective side lane and vice versa. If the shuttle comprises wheels for moving along the second direction, said wheels, which are at the front of the shuttle, are able to move at the transition between the side lane and the main lane, viewed in the direction of travel of the shuttle, first on the first rail, followed by the supporting surfaces of the respective tracks and finally on the second rail. In this way, both rails are used during the transition of the shuttle between the main lane and the side lane and vice versa. Since the supporting surface adjoins both rails, the shuttle is readily able to move from the first rail to the supporting surface and from the supporting surface to the second rail.

The tracks also allow easy detection by means of sensors. Specifically, a shuttle which is displaceable on the shelving structure may be provided with sensors in order to determine its position in the shelving structure. In this case, the tracks are easily detectable, as a result of which the positions of the side lanes can easily be recognized by a shuttle by means of the tracks and the transition between the main lane and a said side lane can then also occur easily.

In order to be able to connect the tracks detachably to the rails, the rails may each be provided with a groove which extends along the first direction and the tracks may be provided with hooking elements which are hookable into the respective grooves. This makes a strong connection between the tracks and the rails possible.

Each rail of the main lane comprises a driving surface on which a shuttle is intended to move along the first direction, wherein the supporting surface of each track at least adjoins the driving surface of the first rail and each driving surface is virtually uninterrupted and extends virtually along a plane. Preferably, a shuttle is designed to move along the second direction on both driving surfaces at the location of the side lanes and, also preferably, the supporting surface of each track adjoins the driving surface of both rails of the main lane. During displacement of a shuttle on the rails, this shuttle will not be impeded and the shuttle can always move smoothly. Preferably, the driving surface of each rail forms virtually the entire top surface of the rail. This is a very simple embodiment of the rails. This driving surface is virtually in the shape of a rectangle, for example. Since the supporting surface of each track adjoins at least the driving surface of the first rail and preferably adjoins the driving surface of both rails, the shuttle, during the transition between the main lane and the respective side lane and vice versa, may rest on at least the first rail while moving along the second direction, as a result of which the shuttle is supported both by the tracks and by the first rail when moving from the main lane to the respective side lane and vice versa and the shuttle is always reliably supported by the shelving structure. For example, with a shuttle which comprises wheels for moving along the second direction, at the transition between a said side lane and the main lane, the front wheels, being the wheels of the shuttle which will be the first to come into contact with the main lane during said transition, will be first to contact and move on the driving surface of the first rail, then contact and move on the supporting surface and finally contact and move on the driving surface of the second rail. In this way, the main lane is used in an optimum manner, viewed in the second direction. The tracks are preferably arranged in such a manner that the supporting surface extends completely between the driving surface of first rail and the driving surface of the second rail, viewed in the second direction, and thus the supporting surface extends next to the driving surface of the first rail and next to the driving surface the second rail. Preferably, the distance between the supporting surface and the driving surface of the first rail, viewed in the second direction, is between 0 mm and 6 mm, more preferably between 0 mm and 5 mm and most preferably between 0 mm and 3 mm.

At the location of the connection of each supporting surface to a respective driving surface, the supporting surface and this driving surface extend virtually at the same height. To this end, the supporting surface and this driving surface preferably extend entirely alongside each other, so that there is no overlap, viewed in the second direction. In this case, the transition between the driving surface and the supporting surface is virtually undetectable for a shuttle which moves along the second direction in order to go from the main lane to a said side lane or vice versa. In this case, a shuttle can move smoothly between the main lane and a said side lane and vice versa and this without the shuttle experiencing too many jerks which might cause damage to the shuttle. This also makes it possible to place several side lanes above one another at the smallest distance apart.

According to the invention, at the location of the connection of each supporting surface to a respective driving surface, the deviation between the height of the supporting surface and the height of the driving surface is between 0 mm and 6 mm, preferably between 0 mm and 5 mm and still more preferably between 0 and 3 mm. This minimal deviation still allows a smooth transition between the driving surface and the supporting surface and vice versa. Allowing a minimal deviation makes the installation/mounting of the shelving structure easier.

According to the invention, the shelving structure comprises adjusting means in order to adjust the height of the supporting surface at the location of the connection of the supporting surface to a said driving surface. For example, the supporting surface rests on a profiled section or forms part of a profiled section which is height-adjustable by means of the adjusting means. This profiled section is then, for example, said track. The height may, for example, be adjusted in a continuously variable way using adjusting screws or height-adjustable sole plates, wherein said profiled section then rests on the sole plates. After the tracks have been connected to the rails, the desired height/position of the supporting surface can still easily be adjusted by means of adjusting means, so that connecting the tracks to the rails does not require a great deal of precision and can also be performed easily and quickly.

The supporting surface is directed downwards at the location of the first rail of the main lane in the direction of this first rail. Thus, a part of the supporting surface may be curved and/or run at an angle and make, for example, a specific angle with a horizontal plane. When the shuttle moves between the main lane and a said side lane and vice versa, the wheels of the shuttle which rest on the tracks will consequently assume a higher position, as a result of which the shuttle comes to lie higher and said transition between the main lane and a said side lane can be effected more smoothly. As a result thereof, the position of the main lane and the positions of the side lanes may deviate slightly from their ideal positions and more tolerance is possible. The installation of the shelving structure thus requires less precision and can therefore be carried out more easily and quicker. In the preferred embodiment in which the supporting surface also adjoins the driving surface of the second rail of the main lane, the supporting surface is preferably directed downwards at the location of the second rail of the main lane in the direction of this second rail.

Furthermore preferably, the supporting surface comprises an inclined face which makes an angle with a horizontal plane of between 0.2° and 3° at the location of the first rail. Still more preferably, said angle is between 1.0° and 2.0°. This small incline of the supporting surface in the vicinity of the first rail makes it possible for a shuttle to be easily displaceable between the main lane and a said side lane and vice versa, while at the same time making it possible for small differences in height between the different components of the shelving structure to be compensated for in order not to impede the satisfactory displacement of a shuttle. This incline may, for example, have a dimension along the second direction of between 10 cm and 30 cm, so that the incline is sufficiently large. This ensures that when the shuttle moves between the main lane and the respective side lane, the wheels of the shuttle and in particular the front wheels, viewed in the direction of travel, contact the driving surfaces of the respective side lane. Thus, the incline may have a dimension along the second direction of virtually 20 cm and the difference in height which needs to be covered by this incline may be virtually 0.5 cm. Each supporting surface then preferably comprises centrally, viewed in the second direction, a part which extends along a plane which extends virtually horizontally, this part preferably adjoining said inclined face. If the supporting surface also adjoins the driving surface of the second rail of the main lane, then the supporting surface preferably successively comprises: a said inclined face which is directed downwards, towards the first rail, a central part which extends along a horizontal plane and a second inclined face which is directed downwards, towards the second rail.

In a preferred embodiment, each said side lane which extends opposite and near the first rail, extends at a distance from the first rail, viewed in the second direction, this distance being between 3 cm and 7 cm, preferably between 4 cm and 6 cm. This small distance makes it possible for a shuttle, which is configured to travel on the shelving structure, to be guided continuously while travelling on the main lane. This may be achieved, for example, by means of lateral guide wheels which form part of the shuttle and help to move the shuttle along the first direction in a reliable way. This small distance results in an uncoupling of the main lane and the side lanes and thus also facilitates the mounting of the shelving structure, since in this case, no side lanes have to be installed right up against the main lane. Thus, it is possible to install the main lanes and the side lanes separately. In this case, the adjustment of the position of the main lane with respect to the side lanes may be carried out for each side lane, as a result of which the requirements during assembly and manufacturing are less stringent and the shelving structure is installable more quickly and easily. It is also possible to convert existing warehouses which only comprise shelving structures with side lanes, since all that is required in these cases is to install the main lanes and position them with respect to the side lanes. In addition, this small distance does not impede the transfer of the shuttle between the main lane and a respective side lane and vice versa.

Furthermore preferably, the shelving structure comprises spacers by means of which the distance between the first rail and said side lanes is adjustable. Thus, the desired distance can readily be adjusted after the shelving structure has been (partly) installed. Furthermore preferably, these spacers are directly connected to the main lane and directly connected to a said side lane, so that the main lane and the side lanes are easily positionable with respect to each other by means of these spacers after the shelving structure has been (partly) installed. The correct installation and positioning of the shelving structure is consequently greatly facilitated, as a result of which people who are less experienced and/or skilled can install this shelving structure. These spacers may be configured in such a way that they are also useful to adjust the height of the side lanes.

In a preferred embodiment, each side lane which extends opposite and near the first rail comprises two rail elements, each having a driving surface on which the shuttle is displaceable along the second direction, wherein the driving surfaces of a said side lane extend at the same height or at most 5 mm lower than the minimum height of the driving surface of the first rail of the main lane. This makes a smooth transition between the main lane and a said side lane possible. Furthermore preferably, the shelving structure comprises adjusting means to adjust the heights of the driving surfaces of the rail elements. This makes it possible to adjust these heights even after the shelving structure has already been (partly) installed, as a result of which the installation can take place more easily and quicker. Thus, the rail elements can rest on sole plates which are height-adjustable. These driving surfaces preferably extend as a continuation of the tracks of the respective crossing. In a specific embodiment, each rail element may, at the location of the first rail, comprise a mounting edge which adjoins the driving surface of this rail element in order to ensure a smooth transition between the main lane and the respective side lane.

Preferably, the driving surface of the first rail is directed downwards in the direction of the respective side lanes which extend opposite and near the first rail. This makes a smooth transition between the main lane and the side lane possible. If the supporting surface is directed downwards in the direction of the first rail at the location of this first rail of the main lane, then the supporting surface and the first rail preferably have virtually the same curve or incline. At the location of the transition of the supporting surface and the driving surface of the first rail, the incline or the curve of the supporting surface is continued, as a result of which a smooth transition of a shuttle from the main lane to a said side lane and vice versa is possible.

Furthermore preferably, the driving surface of the first rail at least partly extends along a plane which makes an angle with a horizontal plane of between 0.2° and 3°. Still more preferably, said angle is between 1.0° and 2.0°. Still more preferably, the driving surface extends substantially along this said plane.

Also furthermore preferably, the driving surface of the second rail is directed downwards in the direction away from the respective side lanes which extend opposite and near the first rail extend. Still more preferably, the first and the second rail are each others mirror image, viewed in a virtually vertical plane which extends along the first direction.

In a preferred embodiment, a said track comprises two upright walls which extend along the second direction and at a distance apart, viewed in the first direction, wherein the respective supporting surface extends between these upright walls and these upright walls are configured to guide a shuttle which travels on the tracks of the respective crossing. Thus, one track per crossing may comprise said upright walls. Preferably, all tracks comprise such upright walls. By providing these upright walls, a shuttle which moves along the second direction is guided reliably if it is (partly) supported by tracks. If the shuttle in addition also has guide wheels for guiding the movement along the second direction when the shuttle travels on a said side lane, the movement of the shuttle will be guided along the second direction by both the upright walls and the guide wheels for a specific time period during the transition between the main lane and the side lane and vice versa, as a result of which the shuttle will not deviate from its path along the second direction during said transitions.

According to claim 9, the present invention also relates to an assembly of a shelving structure and a shuttle which is displaceable on this shelving structure, wherein the shelving structure is a shelving structure as represented above. In this case, the shuttle is then preferably modified to be able to travel on this shelving structure.

Preferably, the shuttle comprises sensors for detecting the tracks. By detecting the tracks, for example with optical sensors, the shuttle can easily determine where the side lanes are situated. Obviously, the shuttle may comprise still other detection systems to optimize the displacement of the shuttle. Thus, it is possible to measure the speed and detect the positions for accelerating, decelerating and/or stopping. Preferably, the shuttle is automatically actuated by means of a computer system. When the driving surface of the first rail extends at least partly along a said plane which makes an angle with a horizontal plane, the shuttle preferably comprises first wheels for travelling on the first and the second rail of the main lane, respectively, wherein the first wheels which are configured to travel on the first rail have a chamfer which corresponds to the driving surface of the first rail. In this case, these first wheels are then chamfered and very suitable to travel on this first rail.

Preferably, the shuttle comprises second wheels for travelling on the side lanes, wherein the shuttle comprises at least 8 second wheels. Thus, two mutually opposite sides of the shuttle each comprise 4 second wheels. The shuttle is reliably supported by means of 8 wheels when it moves along the second direction and thus also during the transition from a said side lane to the main lane and vice versa, as a result of which this transition may take place smoothly.

The present invention will now be explained in more detail by means of the following detailed description of a preferred embodiment of a shelving structure and an assembly according to the present invention. The sole aim of this description is to give illustrative examples and to indicate further advantages and features.

In this detailed description, reference numerals are used to refer to the attached drawings, in which:

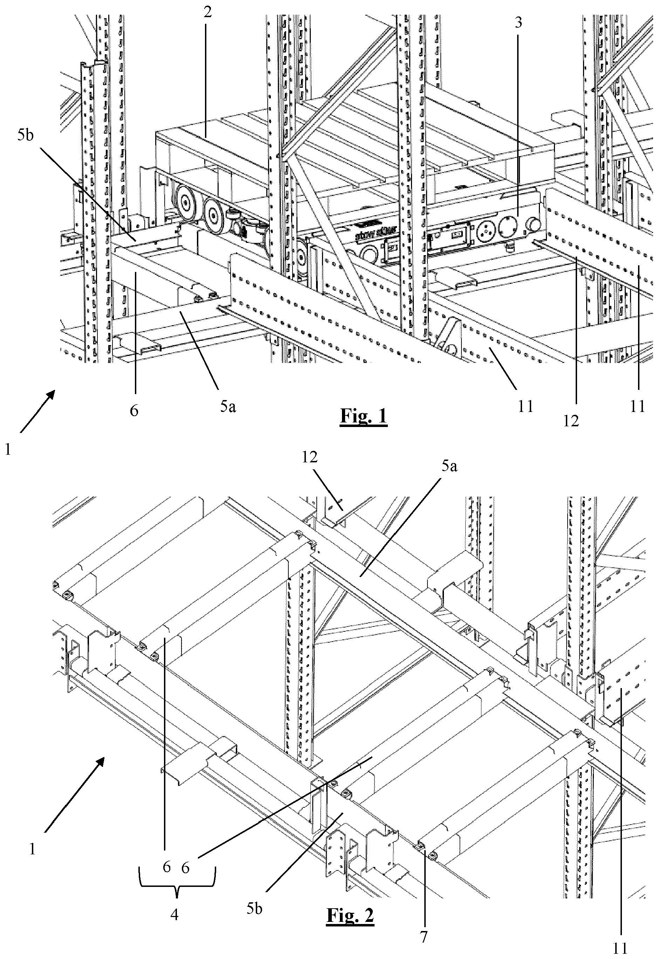

- ***Fig. 1*** shows a perspective view of a part of a shelving structure according to the invention, wherein a shuttle which is displaceable on the shelving structure, is visible;
- ***Fig. 2*** shows another perspective view of a part of a shelving structure according to the invention;
- ***Figs. 3, 4 and 5*** show diagrammatic views of a cross section through a part of the shelving structure along a plane perpendicular to the first direction at the location of the transition between a said side lane and the main lane, wherein a shuttle is shown which travels from the side lane to the tracks of the respective crossing of the main lane, the shuttle being situated on the side lane in Fig. 3, the shuttle being partly situated on the side lane and partly on the main lane in Fig. 4, and the shuttle being completely situated on the main lane in Fig. 5;

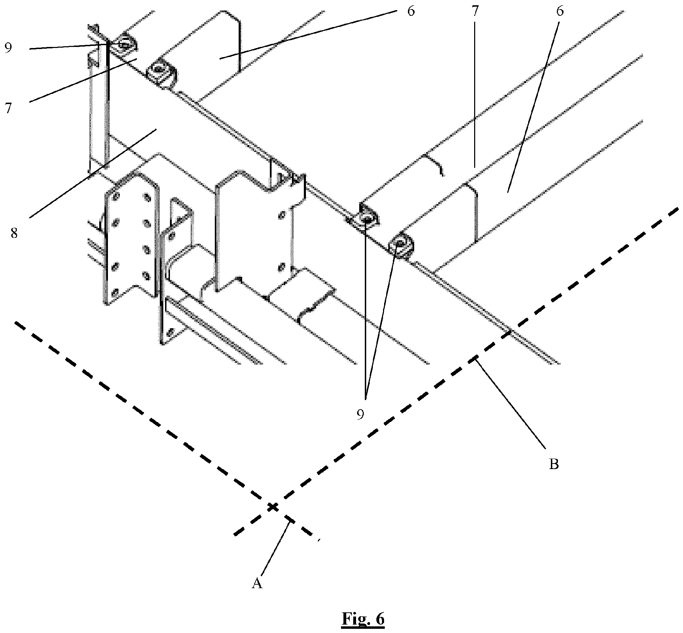

- ***Fig. 6*** shows a detail view of Fig. 2.

The shelving structure (1) comprises several storeys, wherein each storey comprises several side lanes on which pallets (2) are storable and on which a shuttle (3) is displaceable, and one main lane on which a shuttle (3) is displaceable. The main lane of each storey comprises one crossing (4) per side lane. In this way, a shuttle (3) is movable between the various side lanes of the storey by means of the main lane. The side lanes are situated on one side of the main lane. The main lane extends along a first direction (A) and the several side lanes extend along a second direction (B) which is perpendicular to the first direction (A). The first and the second direction (A, B) extend virtually horizontally, so that the shuttle (3) is readily movable on the main lane and the side lanes.

The main lane comprises a first and a second rail (5a, 5b) which extend along the first direction (A) at a distance apart and on which a shuttle (3) is displaceable along the first direction (A). Each side lane comprises two rail elements (11) which extend along the second direction (B) at a distance apart and on which a shuttle (3) is displaceable along the second direction (B). Each side lane has a first end portion and a second end portion situated opposite the first end portion, wherein each first end portion extends near the first rail (5a) of the main lane.

Each crossing (4) comprises two tracks (6) which are each connected to the two rails (5a, 5b) of the main lane and substantially extend between these two rails (5a, 5b) and along the second direction (B). Each track (6) comprises a supporting surface (7) on which the shuttle (3) is displaceable along the second direction (B), and the rails (5a, 5b) each comprise a driving surface (8) at the top which forms virtually the entire top of the rail (5a, 5b) and virtually extends along a plane, wherein the supporting surface (7) of each track (6) adjoins both said driving surfaces (8). The shuttle (3) is configured to travel on these said driving surfaces (8) along the first direction (A) and, at the location of the tracks (6), the shuttle (3) is additionally configured to travel on these said driving surfaces (8) along the second direction (B). Each driving surface (8) forms an uninterrupted plane, so that the displacement of the shuttle (3) can always take place smoothly. Each supporting surface (7) extends completely between the driving surfaces (8) of both rails (5a, 5b).

At the location of the connection of each supporting surface (7) to a respective driving surface (8), the supporting surface (7) and this driving surface (8) extend at virtually the same height. To this end, the shelving structure (1) comprises adjusting means (9) by means of which the height of the supporting surface (7) can be adjusted with respect to said driving surfaces (8). The supporting surface (7) extends between two upright walls of the tracks (6), so that the shuttle (3) is reliably guided in its movement.

Furthermore, each supporting surface (7) is directed downwards in the direction of the rail (5a, 5b) at the location of each respective rail (5a, 5b) of the main lane. To this end, the supporting surface (7) comprises an incline which extends along a plane which makes an angle of virtually 1.5° with a horizontal plane. This incline has a dimension, viewed in the second direction, of virtually 20 cm. Each supporting surface (7) thus comprises, successively, a first incline which adjoins the driving surface (8) of the first rail (5a), a horizontally running part and a second incline which adjoins the driving surface (8) of the second rail (5b).

Each rail element (11) comprises a driving surface (12) which extends along the second direction (B) and the shuttle (3) is configured to travel on the driving surfaces (12) during its displacement on the side lane along the second direction (B).

The distance of the first rail (5a) to the driving surface (12) of each rail element (11) of a said side lane, viewed in the second direction (B), is virtually 5 cm. To this end, the shelving structure (1) comprises spacers (10) which are each connected to both the first rail (5a) and a rail element (11) of a said side lane, by means of which said distance is settable as desired.

The driving surface (8) of the first rail (5a) is directed downwards in the direction of the side lanes and extends along a plane which makes an angle of virtually 1.5° with a horizontal plane. The driving surface (8) of the second rail (5b) also extends along a plane which makes an angle of virtually 1.5° with a horizontal plane. The second rail (5b) is the mirror image of the first rail (5a).

The driving surfaces (12) of the rail elements (11) are at virtually the same height as the minimum height of the driving surface (8) of the first rail (5a) of the main lane.

The shuttle (3) which is configured to travel in this shelving structure (1) is adapted to this shelving structure (1). Thus, this shuttle (3) comprises first wheels by means of which the shuttle (3) is displaceable along the first direction (A), wherein these wheels are chamfered, so that they bear completely againt the respective driving surfaces (8) of the main lane during travel along the first direction (A). The shuttle (3) also comprises 8 second wheels for travel on the side lanes, with in each case 4 second wheels being provided to travel on the driving surface (12) of the one rail element (11) of a said side lane and 4 second wheels being provided to travel on the driving surface (12) of the other rail element (11) of a said side lane. By means of 8 second wheels, the transition between a said side lane and the main lane and vice versa is readily and easily accomplishable.

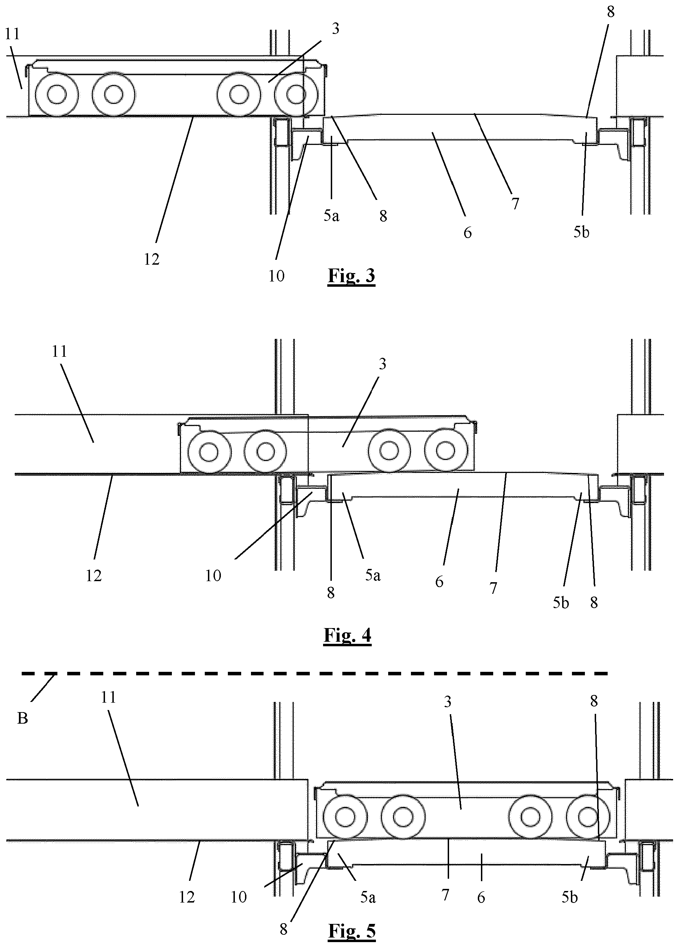

The transition between a said side lane and the main lane is shown in Figs. 3, 4 and 5. As is visible in Fig. 3, the shuttle (3) is largely situated in the side lane and still rests completely on the side lane. Two second wheels, which are situated on either side of the shuttle (3), are partly situated between the side lane and the main lane. Subsequently, said last two second wheels first make contact with the driving surface (8) of the first rail (5a) and subsequently with the supporting surfaces (7) of the tracks (6) until they reach the position in Fig. 4, in which the shuttle (3) is partly supported by the side lane and partly by the tracks (6). Thereafter, the shuttle (3) moves further along the second direction (B), so that the position in Fig. 5 is reached and the shuttle (3) is supported substantially by the tracks (6) and the shuttle (3) can transform in order to allow displacement along the first direction (A). The inclines of the rails (5a, 5b) and the inclines of the supporting surfaces (7) facilitate this transition.

## Claims

1. Shelving structure (1) comprising one or several storeys, wherein each storey comprises several side lanes for storing pallets (2) and on which a shuttle (3) is displaceable, and at least one main lane on which a shuttle (3) is displaceable, wherein a said main lane comprises several crossings (4) for providing access to respective side lanes, so that a shuttle (3) is movable between the respective side lanes via the main lane, wherein the main lane extends along a first direction (A) and the several side lanes extend along a second direction (B) which makes an angle with the first direction (A), and wherein the first and the second direction (A, B) extend virtually horizontally, wherein the main lane comprises a first and a second rail (5a, 5b) which extend along the first direction (A) and at a distance apart, viewed in the second direction (B), and on which a shuttle (3) is displaceable along the first direction (A), wherein at least the first rail (5a) extends opposite and near the end sections of respective side lanes, and in that each crossing (4) of the main lane comprises two tracks (6) which are each connected to the two rails (5a, 5b) of the main lane and substantially extend between these two rails (5a, 5b) at the location of the respective side lane, wherein the tracks (6) each comprise a supporting surface (7) on which the shuttle (3) is displaceable along the second direction (B), wherein the supporting surface (7) of each track (6) adjoins at least the first rail (5a), wherein each supporting surface (7) extends substantially between the first rail (5a) and the second rail (5b), viewed in the second direction (B), and thus the supporting surface (7) extends substantially next to the first rail (5a), wherein each rail (5a, 5b) of the main lane comprises a driving surface (8) on which a shuttle (3) is intended to move along the first direction (A), wherein the supporting surface (7) of each track (6) at least adjoins the driving surface (8) of the first rail (5a) and each driving surface (8) is virtually uninterrupted and extends virtually along a plane, wherein at the location of the connection of each supporting surface (7) to a respective driving surface (8), the supporting surface (7) and this driving surface (8) extend virtually at the same height, wherein the deviation between the height of the supporting surface (7) and the height of the driving surface (8) is preferably between 0 mm and 6 mm, still more preferably between 0 mm and 5 mm and most preferably between 0 mm and 3 mm, **characterized in that** the supporting surface (7) is directed downwards at the location of the first rail (5a) of the main lane in the direction of this first rail (5a) and **in that** the shelving structure (1) comprises adjusting means (9) in order to adjust the height of the supporting surface (7) at the location of the connection of the supporting surface (7) to a said driving surface (8).

2. Shelving structure (1) according to Claim 1, **characterized in that** the supporting surface (7) comprises an inclined face which makes an angle with a horizontal plane of between 0.2° and 3° at the location of the first rail (5a).

3. Shelving structure (1) according to one of the preceding claims, **characterized in that** each said side lane which extends opposite and near the first rail (5a), extends at a distance from this first rail (5a), viewed in the second direction (B), this distance being between 3 cm and 7 cm.

4. Shelving structure (1) according to Claim 3, **characterized in that** the shelving structure (1) comprises spacers (10) by means of which the distance between the first rail (5a) and said side lanes is adjustable.

5. Shelving structure (1) according to one of the preceding claims, **characterized in that** each side lane which extends opposite and near the first rail (5a) comprises two rail elements (11), each having a driving surface (12) on which the shuttle (3) is displaceable along the second direction (B), wherein the driving surfaces (12) of a said side lane extend at the same height or at most 5 mm lower than the minimum height of the driving surface (8) of the first rail (5a) of the main lane.

6. Shelving structure (1) according to one of the preceding claims, **characterized in that** the driving surface (8) of the first rail (5a) is directed downwards in the direction of the respective side lanes which extend opposite and near the first rail (5a), and **in that** the driving surface (8) of the first rail (5a) preferably at least partly extends along a plane which makes an angle with a horizontal plane, wherein this angle is between 0.2° and 3°.

7. Shelving structure (1) according to Claim 6, **characterized in that** the driving surface (8) of the second rail (5b) is directed downwards in the direction away from the respective side lanes which extend opposite and near the first rail (5a).

8. Shelving structure (1) according to one of the preceding claims, **characterized in that** a said track (6) comprises two upright walls which extend along the second direction (B) and at a distance apart, viewed in the first direction (A), wherein the respective supporting surface (7) extends between these upright walls and these upright walls are configured to guide a shuttle (3) which travels on the tracks (6) of the respective crossing (4).

9. Assembly of a shelving structure (1) and a shuttle (3) which is displaceable on the shelving structure (1), **characterized in that** the shelving structure (1) is a shelving structure (1) as defined in one of Claims 1 to 8.

10. Assembly according to Claim 9 and according to Claim 6, **characterized in that** the shuttle (3) comprises first wheels for travelling on the rails (5a, 5b) of the main lane, wherein the first wheels which are configured to travel on the first rail (5a) have a chamfer which corresponds to the driving surface (8) of the first rail (5a).

## Patentansprüche

1. Regalstruktur (1), umfassend eine oder mehrere Etagen, wobei jede Etage mehrere Seitenkanäle zum Lagern von Paletten (2) und auf denen ein Shuttle (3) verschiebbar ist, und mindestens einen Hauptkanal, auf dem ein Shuttle (3) verschiebbar ist, umfasst, wobei der Hauptkanal mehrere Kreuzungen (4) für Zugang zu den jeweiligen Seitenkanälen umfasst, sodass ein Shuttle (3) über den Hauptkanal zwischen den jeweiligen Seitenkanälen beweglich ist, wobei sich der Hauptkanal entlang einer ersten Richtung (A) erstreckt und sich die mehreren Seitenkanäle entlang einer zweiten Richtung (B) erstrecken, die zur ersten Richtung (A) angewinkelt ist, und wobei sich die erste und zweite Richtung (A, B) nahezu horizontal erstrecken, wobei der Hauptkanal eine erste und eine zweite Schiene (5a, 5b) umfasst, die sich, in die zweite Richtung (B) betrachtet, entlang der ersten Richtung (A) und voneinander beabstandet erstrecken, und auf denen ein Shuttle (3) entlang der ersten Richtung (A) verschiebbar ist, wobei sich zumindest die erste Schiene (5a) den Endabschnitten der jeweiligen Seitenkanäle entgegengesetzt und in deren Nähe erstreckt, und wobei jede Kreuzung (4) des Hauptkanals zwei Spuren (6) umfasst, die jeweils mit den zwei Schienen (5a, 5b) des Hauptkanals verbunden sind und sich an der Position des jeweiligen Seitenkanals im Wesentlichen zwischen diesen zwei Schienen (5a, 5b) erstrecken, wobei die Spuren (6) jeweils eine Trägerfläche (7) umfassen, auf denen der Shuttle (3) entlang der zweiten Richtung (B) verschiebbar ist, wobei die Trägerfläche (7) jeder Spur (6) an zumindest die erste Schiene (5a) angrenzt, wobei sich jede Trägerfläche (7), in die zweite Richtung (B) betrachtet, im Wesentlichen zwischen der ersten Schiene (5a) und der zweiten Schiene (5b) erstreckt und sich somit die Trägerfläche (7) im Wesentlichen neben der ersten Schiene (5a) erstreckt, wobei jede Schiene (5a, 5b) des Hauptkanals eine Fahrfläche (8) umfasst, auf der sich ein Shuttle (3) entlang der ersten Richtung (A) bewegt, wobei die Trägerfläche (7) jeder Spur (6) zumindest an die Fahrfläche (8) der ersten Schiene (5a) angrenzt und jede Fahrfläche (8) nahezu ununterbrochen ist und sich nahezu entlang einer Ebene erstreckt, wobei sich an der Position der Verbindung jeder Trägerfläche (7) mit einer jeweiligen Fahrfläche (8) die Trägerfläche (7) und diese Fahrfläche (8) nahezu auf derselben Höhe erstrecken,
wobei die Abweichung zwischen der Höhe der Trägerfläche (7) und der Höhe der Fahrfläche (8) vorzugsweise zwischen 0 mm und 6 mm, weiter bevorzugt zwischen 0 mm und 5 mm und am meisten bevorzugt zwischen 0 mm und 3 mm beträgt, **dadurch gekennzeichnet, dass** die Trägerfläche (7) an der Position der ersten Schiene (5a) des Hauptkanals in Richtung dieser ersten Schiene (5a) abwärts gerichtet ist, und dass die Regalstruktur (1) eine Einstelleinrichtung (9) umfasst, um die Höhe der Trägerfläche (7) an der Position der Verbindung der Trägerfläche (7) mit der Fahrfläche (8) einzustellen.

2. Regalstruktur (1) nach Anspruch 1, **dadurch gekennzeichnet, dass** die Trägerfläche (7) eine geneigte Fläche umfasst, die an der Position der ersten Schiene (5a) einen Winkel zu einer horizontalen Ebene von zwischen 0,2° und 3° ausbildet.

3. Regalstruktur (1) nach einem der vorstehenden Ansprüche, **dadurch gekennzeichnet, dass** jeder Seitenkanal, der sich in der Nähe und entgegengesetzt der ersten Schiene (5a) erstreckt, sich, in die zweite Richtung (B) betrachtet, von dieser ersten Schiene (5a) beabstandet erstreckt, wobei dieser Abstand zwischen 3 cm und 7 cm beträgt.

4. Regalstruktur (1) nach Anspruch 3, **dadurch gekennzeichnet, dass** die Regalstruktur (1) Abstandhalter (10) umfasst, mittels derer der Abstand zwischen der ersten Schiene (5a) und den Seitenkanälen einstellbar ist.

5. Regalstruktur (1) nach einem der vorstehenden Ansprüche, **dadurch gekennzeichnet, dass** jeder Seitenkanal, der sich in der Nähe und entgegengesetzt der ersten Schiene (5a) erstreckt, zwei Schienenelemente (11) umfasst, die jeweils eine Fahrfläche (12) aufweisen, auf welcher der Shuttle (3) entlang der zweiten Richtung (B) verschiebbar ist, wobei sich die Fahrflächen (12) des Seitenkanals auf derselben Höhe wie die oder maximal 5 mm unter der Mindesthöhe der Fahrfläche (8) der ersten Schiene (5a) des Hauptkanals erstrecken.

6. Regalstruktur (1) nach einem der vorstehenden Ansprüche, **dadurch gekennzeichnet, dass** die Fahrfläche (8) der ersten Schiene (5a) in die Richtung der jeweiligen Seitenkanäle, die sich in der Nähe und entgegengesetzt der ersten Schiene (5a) erstrecken, abwärts gerichtet ist, und dass sich die Fahrfläche (8) der ersten Schiene (5a) vorzugsweise zumindest teilweise entlang einer Ebene erstreckt, die einen Winkel zu einer horizontalen Ebene ausbildet, wobei dieser Winkel zwischen 0,2° und 3° beträgt.

7. Regalstruktur (1) nach Anspruch 6, **dadurch gekennzeichnet, dass** die Fahrfläche (8) der zweiten Schiene (5b) in die Richtung von den jeweiligen Seitenkanälen weg, die sich in der Nähe und entgegengesetzt der ersten Schiene (5a) erstrecken, abwärts gerichtet ist.

8. Regalstruktur (1) nach einem der vorstehenden Ansprüche, **dadurch gekennzeichnet, dass** die Spur (6) zwei aufrechte Wände umfasst, die sich, in die erste Richtung (A) betrachtet, entlang der zweiten Richtung (B) und voneinander beabstandet erstrecken, wobei sich die jeweilige Trägerfläche (7) zwischen diesen aufrechten Wänden erstreckt und diese aufrechten Wände dazu ausgelegt sind, einen Shuttle (3) zu führen, der auf den Spuren (6) der jeweiligen Kreuzung (4) fährt.

9. Anordnung einer Regalstruktur (1) und eines Shuttles (3), der auf der Regalstruktur (1) verschiebbar ist, **dadurch gekennzeichnet, dass** die Regalstruktur (1) eine in einem der Ansprüche 1 bis 8 definierte Regalstruktur (1) ist.

10. Anordnung nach Anspruch 9 und nach Anspruch 6, **dadurch gekennzeichnet, dass** der Shuttle (3) erste Räder zum Fahren auf den Schienen (5a, 5b) des Hauptkanals umfasst, wobei die ersten Räder, die dazu ausgelegt sind, auf der ersten Schiene (5a) zu fahren, eine Fase aufweisen, die der Fahrfläche (8) der ersten Schiene (5a) entspricht.

## Revendications

1. Structure de rayonnage (1) comprenant un ou plusieurs étages, chaque étage comprend plusieurs voies latérales pour stocker des palettes (2) et sur lesquelles une navette (3) est déplaçable, et au moins une voie principale sur laquelle une navette (3) est déplaçable, lesdites voies principales comprenant plusieurs croisements (4) pour permettre l'accès aux voies latérales respectives, de sorte qu'une navette (3) puisse se déplacer entre les voies latérales respectives par l'intermédiaire de la voie principale, la voie principale s'étendant le long d'une première direction (A) et les plusieurs voies latérales s'étendant le long d'une seconde direction (B) qui forme un angle avec la première direction (A), et les première et seconde directions (A, B) s'étendant pratiquement horizontalement, la voie principale comprenant un premier et un second rail (5a, 5b) qui s'étendent le long de la première direction (A) et à une certaine distance l'un de l'autre, vu dans la seconde direction (B), et sur lesquels une navette (3) est déplaçable le long de la première direction (A), au moins le premier rail (5a) s'étendant à l'opposé et à proximité des sections d'extrémité des voies latérales respectives, et chaque croisement (4) de la voie principale comprenant deux pistes (6) qui sont chacune reliées aux deux rails (5a, 5b) de la voie principale et s'étendent sensiblement entre ces deux rails (5a, 5b) au niveau de l'emplacement de la voie latéral respective, les pistes (6) comprenant chacune une surface d'appui (7) sur laquelle la navette (3) est déplaçable le long de la seconde direction (B), la surface d'appui (7) de chaque piste (6) jouxtant au moins le premier rail (5a), chaque surface d'appui (7) s'étendant sensiblement entre le premier rail (5a) et le second rail (5b), vu dans la seconde direction (B), et ainsi la surface d'appui (7) s'étendant sensiblement à côté du premier rail (5a), chaque rail (5a, 5b) de la voie principale comprenant une surface d'entraînement (8) sur laquelle une navette (3) est destinée à se déplacer le long de la première direction (A), la surface d'appui (7) de chaque piste (6) jouxtant au moins la surface d'entraînement (8) du premier rail (5a) et chaque surface d'entraînement (8) étant pratiquement ininterrompue et s'étendant pratiquement le long d'un plan, au niveau de l'emplacement de la liaison de chaque surface d'appui (7) à une surface d'entraînement (8) respective, la surface d'appui (7) et cette surface d'entraînement (8) s'étendant pratiquement à la même hauteur, l'écart entre la hauteur de la surface d'appui (7) et la hauteur de la surface d'entraînement (8) étant de préférence compris entre 0 mm et 6 mm, de préférence encore entre 0 mm et 5 mm et de manière encore préférée entre 0 mm et 3 mm, **caractérisée en ce que** la surface d'appui (7) est orientée vers le bas au niveau de l'emplacement du premier rail (5a) de la voie principale en direction de ce premier rail (5a) et **en ce que** la structure de rayonnage (1) comprend des moyens de réglage (9) afin de régler la hauteur de la surface d'appui (7) au niveau de l'emplacement de la liaison de la surface d'appui (7) à ladite surface d'entraînement (8).

2. Structure de rayonnage (1) selon la revendication 1, **caractérisée en ce que** la surface d'appui (7) comprend une face inclinée qui fait un angle avec un plan horizontal compris entre 0,2° et 3° au niveau de l'emplacement du premier rail (5a).

3. Structure de rayonnage (1) selon l'une des revendications précédentes, **caractérisé en ce que** chacun desdits couloirs latéraux qui s'étend à l'opposé et à proximité du premier rail (5a), s'étend à une distance de ce premier rail (5a), vu dans la seconde direction (B), cette distance étant comprise entre 3 cm et 7 cm.

4. Structure de rayonnage (1) selon la revendication 3, **caractérisée en ce que** la structure de rayonnage (1) comprend des entretoises (10) au moyen desquelles la distance entre le premier rail (5a) et lesdites voies latérales est réglable.

5. Structure de rayonnage (1) selon l'une des revendications précédentes, **caractérisée en ce que** chaque voie latérale qui s'étend à l'opposé et à proximité du premier rail (5a) comprend deux éléments rail (11), chacun ayant une surface d'entraînement (12) sur laquelle la navette (3) est déplaçable le long de la seconde direction (B), les surfaces d'entraînement (12) de ladite voie latérale s'étendant à la même hauteur ou au maximum 5 mm plus bas que la hauteur minimale de la surface d'entraînement (8) du premier rail (5a) de la voie principale.

6. Structure de rayonnage (1) selon l'une des revendications précédentes, **caractérisée en ce que** la surface d'entraînement (8) du premier rail (5a) est dirigée vers le bas en direction des voies latérales respectives qui s'étendent à l'opposé et à proximité du premier rail (5a), et **en ce que** la surface d'entraînement (8) du premier rail (5a) s'étend de préférence au moins partiellement le long d'un plan qui fait un angle avec un plan horizontal, cet angle étant compris entre 0,2° et 3°.

7. Structure de rayonnage (1) selon la revendication 6, **caractérisée en ce que** la surface d'entraînement (8) du second rail (5b) est dirigée vers le bas dans la direction opposée aux voies latérales respectives qui s'étendent à l'opposé et à proximité du premier rail (5a) .

8. Structure de rayonnage (1) selon l'une des revendications précédentes, **caractérisée en ce que** lesdites pistes (6) comprennent deux parois verticales qui s'étendent le long de la seconde direction (B) et à une certaine distance l'une de l'autre, vu dans la première direction (A), la surface d'appui (7) respective s'étendant entre ces parois verticales et ces parois verticales étant conçues pour guider une navette (3) qui se déplace sur les pistes (6) du croisement (4) respectif.

9. Ensemble d'une structure de rayonnage (1) et d'une navette (3) qui est déplaçable sur la structure de rayonnage (1), **caractérisé en ce que** la structure de rayonnage (1) est une structure de rayonnage (1) selon l'une des revendications 1 à 8.

10. Ensemble selon la revendication 9 et selon la revendication 6, **caractérisé en ce que** la navette (3) comprend des premières roues pour se déplacer sur les rails (5a, 5b) de la voie principale, les premières roues qui sont conçues pour se déplacer sur le premier rail (5a) ayant un chanfrein qui correspond à la surface d'entraînement (8) du premier rail (5a).
